# EUROPEAN PATENT APPLICATION

(11) **EP 1 688 863 A1**
(43) Date of publication of application: **09.08.2006**
(21) Application number: 05105647.1
(22) Date of filing: 23.06.2005
(51) Int. Cl.: G06K 13/07, G06K 17/00

(54) **Device and method for reading electronic radio-frequency identification tags**

(30) Priority: 04.02.2005 IT MI20050163
(71) Applicant: Actvalue Consulting & Solutions S. R. L., 20123 Milano MI (IT)
(72) Inventor: Bergonzi, Stefano, 27020 Torre d'Isola (IT)
(74) Representative: Jorio, Paolo

(57) **Abstract**

A device for reading electronic tags (12) includes an RFID reader (2) for reading electronic tags (12) located in a predetermined read region (R); and a conveying device (5) for conveying a number of articles (11), each having a respective electronic tag (12), through the read region (R) of the RFID reader (2); and a control unit (8) connected to the RFID reader (2) and to the conveying device (5) for controlling operation of the conveying device (5) on the basis of a response from the RFID reader (2).

## Description

The present invention relates to a device and method for reading electronic radio-frequency identification tags.

As is known, of systems for identifying goods, those based on the use of electronic RFID (radio-frequency identification) tags are among the most promising. That is, to each article for identification is applied an RFID tag which can be interrogated and identified remotely by an RFID reader. More specifically, the RFID tag contains at least one antenna; an integrated circuit connected to the antenna; and a capacitor, which acts as a battery (passive type), or a power source, such as a battery (active type). The RFID tag is excited by an appropriate electromagnetic field generated by the reader, and responds by transmitting an identification code. In other words, the very presence of the RFID tag gives rise to disturbance in the electromagnetic field, which is detectable by the RFID reader.

Being small, cheap, and high versatile, RFID identification systems are used in a wide range of applications, from logistics (store management) to production process control, security, imitation prevention, burglar alarm systems, admittance/attendance counts, and many others.

One of the advantages of RFID tags is they can be read remotely with no need for direct optical coupling (as in the case of bar codes), so that the exact content of packaging (such as pallets), even containing dozens of articles, can be identified externally. For which purpose, the package is fed at a predetermined speed through a gantry-type structure incorporating the RFID reader.

Known systems, however, have various drawbacks affecting efficiency. In particular, too-high a travelling speed may result in read errors, especially if numerous tags are located simultaneously close to the reader. Conversely, too-slow a travelling speed has the disadvantage of prolonging read time and reducing the efficiency of the identification system. Since the size of the RFID tag groups close to the reader is unpredictable, optimizing performance (read speed and error percentage) is extremely difficult. Other errors are caused by random orientation of the RFID tags fed past the reader, whereas orientation of the RFID tags with respect to the reader - which is highly directional - is decisive and may compromise reception of the code associated with each tag.

It is an object of the present invention to provide a device and method for reading electronic tags, designed to eliminate the aforementioned drawbacks.

According to the present invention, there are provided a device and method for reading RFID tags, as claimed in Claims 1 and 11 respectively.

A non-limiting embodiment of the invention will be described by way of example with reference to the accompanying drawings, in which:
Figures 1 and 2 show simplified top plan views of a reading device in accordance with one embodiment of the present invention and in two different operating configurations;
Figure 3 shows a flow chart relative to the Figure 1 device;
Figure 4 shows a simplified block diagram of part of the Figure 1 device;
Figure 5 shows a schematic view in perspective of a detail of the Figure 1 device.

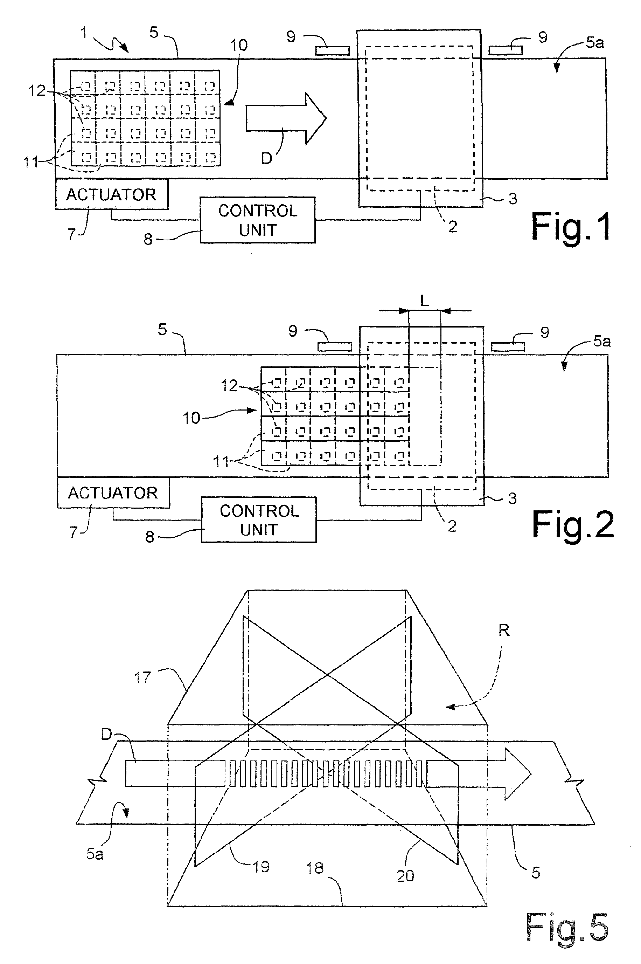

Number 1 in Figure 1 indicates a reading device for reading electronic radio-frequency identification (RFID) tags. In the embodiment described, device 1 is based on 13.56 MHz passive RFID technology, and comprises an RFID reader 2 housed in a tunnel structure 3; a conveyor belt 5 travelling through tunnel structure 3 and equipped with an actuating device 7; and a control unit 8.

Conveyor belt 5 has a loading surface 5a for a package 10 containing a number of articles 11; each article 11 is provided with a respective RFID tag 12, in which an individual identification code is recorded; and RFID tags 12 may be randomly oriented.

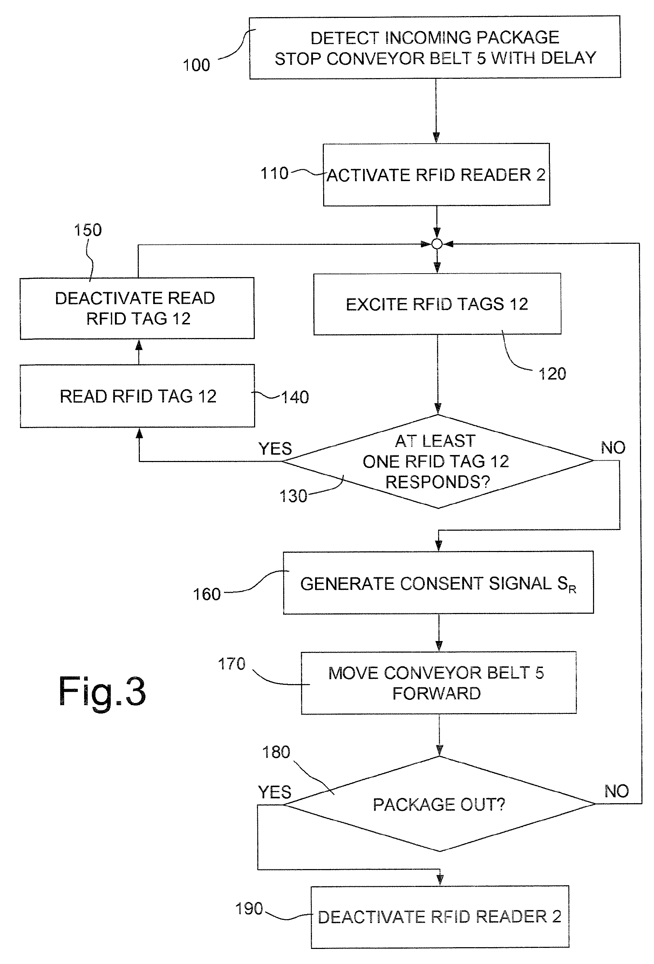

Conveyor belt 5 is operated to feed package 10 in a travelling direction D through tunnel structure 3, where a read region R of RFID reader 2 is defined (see Figure 3) . Tunnel structure 3 preferably comprises photocells 9 cooperating with control unit 8 to determine entry and exit of package 10.

The RFID tags 12 of articles 11 travelling through tunnel structure 3 are interrogated and identified by RFID reader 2 as explained below; and control unit 8 is connected to RFID reader 2 and to actuating device 7 to time the movement of conveyor belt 5 on the basis of the response from RFID reader 2.

With reference to Figures 2 and 3, conveyor belt 5 feeds package 10 to the input of tunnel structure 3. Control unit 8 acts on actuating device 7 to stop conveyor belt 5, with a given delay, upon one of photocells 9 at the input of tunnel structure 3 detecting passage of package 10 (block 100, Figure 3), so that package 10 partly enters tunnel structure 3, and some of articles 11, with respective RFID tags 12 applied to them, are located within the read region R of RFID reader 2 (Figure 2; see also Figure 3). Once conveyor belt 5 is stopped, control unit 8 activates RFID reader 2 (block 110, Figure 3), which is configured to interrogate all the RFID tags 12 in read region R sequentially. More specifically, RFID reader 2 excites the RFID tags 12 in region R (block 120) and determines whether at least one of them responds (block 130). If it does (YES output of block 130), one of RFID tags 12 is interrogated, read and identified (block 140) and then deactivated (block 150) in known manner. More specifically, when interrogating and reading RFID tag 12, RFID reader 2 requests transmission of, and then receives and recognizes, the identification code of article 11 to which the RFID tag 12 is applied. RFID reader 2 employs a conventional conflict management procedure to deal with a number of RFID tags 12 responding simultaneously.

RFID reader 2 excites the RFID tags 12 in read region R cyclically (block 120) until all have been interrogated, read, and identified sequentially. Previously identified RFID tags 12 are deactivated, and therefore do not respond at successive read cycles.

When all the RFID tags 12 in read region R have been read and identified, RFID reader 2 picks up no further response (NO output of block 130) and generates a consent signal S_{R} which is sent to control unit 8 (block 160, Figure 3). In response to consent signal S_{R} (block 170), control unit 8 acts on actuating device 7 to move conveyor belt 5 forward by a predetermined, preferably programmable, amount (in Figure 2, the position of package 10 after conveyor belt 5 is moved forward is indicated by the dash-and-dot line). Conversely, in the absence of consent signal S_{R}, conveyor belt 5 is stopped.

Another group of articles 11 with respective RFID tags 12 is thus fed into read region R. RFID reader 2 then determines whether, as a result of the forward movement of conveyor belt 5, package 10 is completely outside tunnel structure 3 (block 180, Figure 3). If package 10 is still at least partly inside tunnel structure 3 (NO output of block 180), RFID reader 2 repeats the read cycles, starting with excitation of the RFID tags 12 in read region R (block 120), until all have been interrogated, read, identified, and ultimately deactivated (blocks 130-150). Conversely, if the package has travelled right through tunnel structure 3, control unit 8 deactivates RFID reader 2, and activates conveyor belt 5 pending the arrival of another package containing articles with as yet unread RFID tags.

An identical procedure provides for writing RFID tags 12; in which case, following excitation of RFID tags 12, conventionally coded write commands and information for storage are transmitted.

Advantageously, the device according to the invention therefore modulates the mean travelling speed of conveyor belt 5 to maximize read (and write) efficiency of RFID tags 12. Read errors are practically eliminated, by RFID reader 2 always being allowed long enough to interrogate all the RFID tags 12 in the read region before consent is given to move conveyor belt 5 forward. Moreover, the actual read step only takes as long as necessary to identify the RFID tags 12 actually in region R, and involves substantially no downtime. In particular, if the reader receives only a small number of RFID tags 12 on conveyor belt 5, these are read quickly and conveyor belt 5 is advanced rapidly. In other words, the invention provides for rapidly and accurately scanning packages containing even hundreds of articles with respective RFID tags.

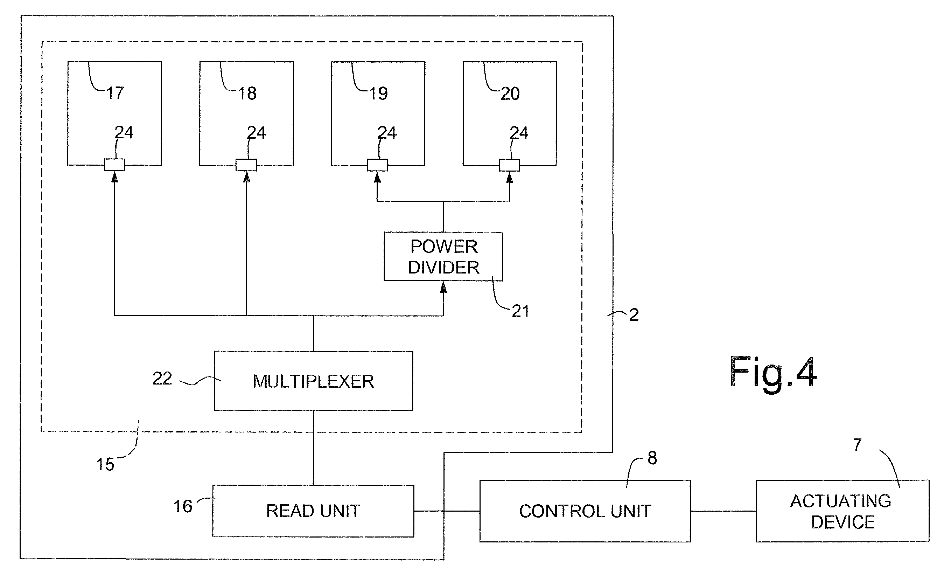

Figures 4 and 5 show more detailed views of RFID reader 2, which comprises a transmitting/receiving device 15 connected to a read unit 16. Transmitting/receiving device 15 comprises a first antenna 17, a second antenna 18, a third antenna 19, a fourth antenna 20, a power divider 21, and a multiplexer 22. In the embodiment described, antennas 17-20 are rectangular loop types with respective impedance matchers 24. First antenna 17 and second antenna 18 are connected directly to multiplexer 22; and third antenna 19 and fourth antenna 20 are both connected to power divider 21, in turn connected to multiplexer 22. Multiplexer 22 is configured to selectively and sequentially connect first antenna 17, second antenna 18, and power divider 21 (i.e. third antenna 19 and fourth antenna 20 simultaneously) to read unit 16; and third antenna 19 and fourth antenna 20 are powered with a 90° phase displacement. In other words, at each read cycle, read unit 16 uses antennas 17-20 sequentially to excite, interrogate, and read RFID tags 12 in different independent receiving/transmission planes and directions to improve read efficiency. Once each read cycle is completed, read unit 16 generates and transmits consent signal S_{R} to control unit 8.

Antennas 17-20 are arranged in the Figure 5 configuration. More specifically, first antenna 17 and second antenna 18 are positioned facing each other and parallel to loading surface 5a of conveyor belt 5; third antenna 19 and fourth antenna 20 are positioned perpendicular to each other and to loading surface 5a of conveyor belt 5; first antenna 17 and second antenna 18 are positioned so that articles 11 on conveyor belt 5 travel through a region defined between first antenna 17 and second antenna 18 and substantially coincident with read region R; and third antenna 19 and fourth antenna 20 are at least partly located between first antenna 17 and second antenna 18, and are positioned crosswise to the travelling direction D of conveyor belt 5, so that articles 11 on conveyor belt 5 travel through them.

The above arrangement of antennas 17-20 enables RFID tags 12 to be identified in various perpendicular, and therefore independent, directions. Given the random orientation of RFID tags 12 entering read region R, transmission and reception between RFID reader 2 and RFID tags 12 are therefore improved, thus virtually eliminating read errors and further improving efficiency.

Clearly, changes may be made to the device and method as described herein without, however, departing from the scope of the present invention as defined in the accompanying Claims.

## Claims

1. A device for reading electronic tags (12), comprising:
an RFID reader (2) for reading electronic tags (12) located in a predetermined read region (R); and
conveying means (5) for conveying a number of articles (11), each having a respective electronic tag (12), through the read region (R) of the RFID reader (2);
**characterized by** comprising a control unit (8) connected to the RFID reader (2) and to the conveying means (5) for controlling operation of the conveying means (5) on the basis of a response from the RFID reader (2) .

2. A device as claimed in Claim 1, **characterized in that** the RFID reader (2) is configured for sequentially interrogating the electronic tags (12) in the read region (R), and for supplying the control unit (8) with a consent signal (S_{R}) when all the electronic tags (12) in the read region (R) have been interrogated.

3. A device as claimed in Claim 2, **characterized in that** the control unit (8) is configured for stopping the conveying means (5) in the absence of the consent signal (S_{R}), and for feeding the conveying means (5) forward by a predetermined amount (L) in the presence of the consent signal (S_{R}) .

4. A device as claimed in any one of the foregoing Claims, **characterized in that** the RFID reader (2) comprises at least a first spiral antenna (17) and a second spiral antenna (18) positioned facing each other and parallel to a loading surface (5a) of the conveying means (5).

5. A device as claimed in Claim 4, **characterized in that** the first antenna (17) and the second antenna (18) are so positioned that the articles (11) conveyed by the conveying means (5) travel through a region defined between the first antenna (17) and the second antenna (18).

6. A device as claimed in Claim 5, **characterized in that** the RFID reader (2) comprises a third spiral antenna (19) and a fourth spiral antenna (20) perpendicular to each other and to the loading surface of the conveying means (5).

7. A device as claimed in Claim 6, **characterized in that** the third antenna (19) and the fourth antenna (20) are so positioned that the articles (11) conveyed on the conveying means (5) travel through them.

8. A device as claimed in Claim 6 or 7, **characterized in that** the third antenna (19) and the fourth antenna (20) are positioned crosswise to a travelling direction (D) of the conveying means (5).

9. A device as claimed in any one of Claims 6 to 8, **characterized in that** the third antenna (19) and the fourth antenna (20) are located at least partly between the first antenna (17) and the second antenna (18).

10. A device as claimed in any one of Claims 6 to 9, **characterized in that** the first antenna (17), second antenna (18), third antenna (19), and fourth antenna (20) are rectangular loop types.

11. A method of reading electronic tags (12), comprising the step of conveying a number of articles (11), each having a respective electronic tag (12), through a predetermined read region (R) of an RFID reader (2); and
reading the electronic tags (12) located in the read region (R);
**characterized by** comprising the step of controlling conveyance of the articles (11) on the basis of a response from the RFID reader (2).

12. A method as claimed in Claim 11, **characterized by** comprising the steps of:
stopping conveyance of the articles (11);
sequentially interrogating the electronic tags (12) in the read region (R); and
restarting conveyance of the articles (11) when all the electronic tags (12) in the read region (R) have been interrogated.

13. A method as claimed in Claim 12, **characterized in that** the step of restarting conveyance comprises moving the articles (11) forward by a predetermined amount (L).
